# NEW EUROPEAN PATENT SPECIFICATION

(11) **EP 0 164 232 B2**
(45) Date of publication and mention of the opposition decision: **07.01.1993**
(45) Mention of the grant of the patent: 25.10.1989
(21) Application number: 85303463.5
(22) Date of filing: 17.05.1985
(51) Int. Cl.: B65D 35/02, B32B 27/32, B32B 15/08

(54) **Multi-layer sheet structure for packaging, a package made therefrom, and a method of making the said structure**
Mehrschichtige Bahnstruktur für Verpackung, daraus hergestellte Verpackung und Verfahren zur Herstellung dieser Struktur
Structure en feuille multicouche pour emballage, emballage fabriqué à partir d'une telle structure et procédé pour la fabrication de cette structure

(30) Priority: 29.05.1984 US 614878; 02.10.1984 US 657003
(43) Date of publication of application: 11.12.1985
(73) Proprietor: AMERICAN NATIONAL CAN COMPANY, Chicago, Illinois 60631 (US)
(72) Inventor: Redding, Dwight Dennis, Appleton Wisconsin 54914 (US)
(74) Representative: MacGregor, Gordon

(56) References cited:
- EP-A- 0 121 336
- US-A- 3 741 253
- US-A- 3 821 182
- US-A- 4 418 841
- Ullmanns Encyklopädie der technischen Chemie, 4th ed., vol. 19, 1980, pp. 208-209
- Römpps Chemie-Lexikon, 8th ed., 1987, p. 3521

## Description

This invention pertains to multiple layer flexible sheet structures for packaging and the use of such structures in containers such as flexible tubes of the type commonly used for packaging paste type products. The invention also concerns the method of making such structures. Multiple layer sheet structures embodying this invention are paperless and include an oriented substructure.

Metal foils, e.g. utilised as a single layer, have long been used to hold und dispense paste type products. However, metal containers and tubes have definite shortcomings compared to other tube structures e.g. made from plastics. Metal tubes are expensive, dent easily and tend to crack with a moderate amount of flexing.

Of recent times, a large share of the tube market has been taken by flexible sheet materials having a multiplicity of polymeric layers. Typical tubes have an inner heat sealable layer, an outer heat sealable layer, and a barrier layer interposed therebetween. Additional layers may further be used in conventional structures to provide other properties or qualities.

Layers of a non-polymeric nature, such as paper and thin metal foils, may also be included in these sheet materials to provide specialized performance functions.

It is known, for example, to provide a layer of thin aluminum foil as a high quality barrier layer. When foil is used, it is common practice to use a highly adhesive polymer to adhere it to adjacent layers of the structure.

While known structures have experienced success commercially, they have possessed certain disadvantages which have limited their usefulness.

Certain products are particularly hard to package because their chemical activities result in the inner tube layers and particularly the aluminum foil layer being attacked. This problem has been addressed by using chemically resistant polymers as the tube interior layers to protect the foil. The most recent developments in that regard are described in our copending European patent application Number 109465, which published after the earlier priority date claimed by the present application. In EP-A-109465, the inner sealant layer of the tube is linear low density polyethylene.

It is also known to include a layer of paper, which may provide dimensional stability, which is particularly important for printing, and which also provides an aesthetically pleasing and aseptically clean appearing white background. Paper also improves deadfold retention.

A particular problem of tube failure is attributed to failure of the tubes due to rough handling during shipping. The tube sidewall may split, allowing the contents of the tube to ooze out. It has been observed that the paper layer is the weakest part of known laminates, and once it begins to fail, the entire tube is weakened and breaks.

The ability of a tube to withstand rough handling is related to its ability to withstand a drop test described hereinafter as a tube drop test, in which a tube filled with product is repeatedly dropped until the tube fails. All tubes shipped in commerce may be expected to be subjected to rough handling, regardless of the product contained, arid are thus subject to handling stresses as exemplifed in the tube drop test. Economic construction of tubes consistently capable of passing the drop test has remained a problem. This problem has been addressed by using a strengthening layer of biaxially oriented polypropylene within the sheet structure, as described in the aforesaid EP-A-109465. As disclosed therein, the laminate contains a paper layer, and while certain improvements in strength are achieved, it is desirable to provide other structures with the dimensional stability and economy of such paper-containing structures, yet which possess improved attributes such as increased strength, to make an even more cost effective structure.

Another improvement in combatting the chemical activity of the product on the container is described in ourcopending European patent application EP-A-115111 which published after the earlier priority date claimed by the present application. EP-A-115111 teaches the use of a polyacrylic acid chrome complex primer between the foil and an ethylene acrylic acid copolymer on the sealant side of the foil.

It is an object of this invention to make an economical, dimensionally-stable, paperless sheet structure suitable for use in making dispensing tubes, which structure has a desired product-holding chemical resistance, and excellent deadfold retention qualities.

Our copending EP-A-121336, which was published after the earlier priority date claimed by the present invention, provides a multiple-layer sheet structure for use in a heat sealed package, characterised in that the outer layers (destined to form the exterior of a package) are an outermost heat sealable layer, a polypropylene layer and an intervening adhesive layer, the polypropylene layer at least being uniaxially oriented at a stretch ratio of 3/1 to 4/1 and this layer being disposed within 1.5 mil (0.038 mm) of the exterior surface.

We have now found that, unpredictably, benefits are attainable even if certain depatures are made from the teaching of EP-A-121336. For example, the stretch ratio can be between 2/1 to about 6/1 and the polypropylene layer can be disposed anywhere between 0.2 and 4 mil (0.005 and 0.10 mm) from the said exterior surface.

Moreover, we now find that other materials than polypropylene can be used for the oriented polymer layer.

Thus, according to one feature of the pressnt invention, the stretch ratio for polypropylene can be below 3/1 to 2/1 or from above 4/1 to 6/1. According to another feature, the oriented polymer layer can be located further from the said exterior surface, e.g. 1.5 to 4 mil (0.038 to 0.10 mm) therefrom.

Also according to this invention, the uniaxial orientation can be performed by stretching in either the machine direction or the cross-machine direction, these directions of course relating to the extrusion or laminating machine by which the multilayer sheet structure is produced.

As well as polypropylene, the present invention can use polyethylene, ethylene copolymers, high density polyethylene, polyethylene - polypropylene blends, nylons and polyesters for the oriented polymer layer. The stretch ratios can be 2/1 to 6/1 for these except for high density polyethylene, for which the ratio can be 3/1 to 8/1.

Therefore, according to one aspect of the present invention, there is provided a multiple-layer sheet structure for use in a paperless heat sealed package, having a heat-sealable surface layer, an oriented polymer layer and optionally an intervening adhesive layer, wherein the oriented polymer layer is selected from polypropylene, polyethylene, high density polyethylene, ethylene copolymers, polypropylene - polyethylene blends, nylons and polyesters, and this oriented polymer layers is uniaxially oriented at a stretch ratio of 2/1 up to 6/1 except where the selected polymer is (1) polypropylene, for which said ratio is from 2/1 up to but not including 3/1 or 6/1 down to but not including 4/1, or (2) high density polyethylene, for which said ratio is from 3/1 to 8/1, and wherein the oriented polymer layer is disposed within 0.2 to 4 mils (0.005 to 0.10 mm) of that surface of the heat sealable layer which is remote from the oriented polymer layer.

Such a multiple layer sheet structure can comprise, in order:
(a) a first heat sealable layer at a first exterior surface of the structure;
(b) a first adhesive layer, for example, of ethylene acrylic acid copolymer;
(c) a metal foil layer;
(d) a second adhesive layer for example of ethylene acrylic acid copolymer;
(e) a first layer of polyethylene or an ethylene copolymer;
(f) a second layer of polyethylene or an ethylene copolymer;
(g) a primer layer;
(h) a layer of the uniaxially oriented polymer; the polymer being selected from polypropylene, polyethylene, high density polyethylene, ethylene copolymers, polyethylene-polypropylene blends, nylons and polyesters, the orientation ratio being from 2/1 up to 6/1 except where the selected polymer is (1) polypropylene, for which said ratio is from 2/1 up to but not including 3/1 or 6/1 down to but not including 4/1, or (2) high density polyethylene, for which said ratio is from 3/1 to 8/1;
(i) a second heat sealable layer adjacent the oriented polymer layer, at a second exterior surface of the structure; and
(j) a third adhesive layer intervening between the oriented polymer layer and the second heat sealable layer.

In creating this structure, the second heat sealable layer, the third adhesive layer, and the said polymer layer can be produced by coextrusion as a three layer film and are all oriented simultaneously as a three layer film, the orientation ratio being as aforesaid. Subsequently, the other layers of the structure are laminated to this film. The three layer coextruded film can be 2.0-2.5 mils (0.051 to 0.064 mm) thick and the said polymer can be about 1.0 mil (0.025 mm) thick.

In order that this multiple layer sheet material may be formed into tubular containers, it is essential that the first and second heat sealable layers be compatible for heat sealing to each other.

The invention is also embodied in a flexible dispensing tube made of the multiple layer sheet material, hereinabove defined, with the oriented layer or layers disposed toward the exterior surface of the tube.

The invention further comprehends a method of making a multiple layer sheet material. The steps of the method include first coextruding a plural layer polymeric film and uniaxially orienting it to produce an oriented film having consecutive layers of polyethylene, optionally an adhesive and an orientable polymer selected from polypropylene, polyethylene, high density polyethylene, ethylene copolymers, polypropylene-polyethylene blends, nylons and polyesters, whereby the orientable polymer layer is located within 0.2 to 4 mils (0.005 to 0.10 mm) of that surface of the polyethylene layer remote from the orientable polymer, and the film is oriented at an orientation ratio of 2/1 up to 6/1 except when the selected polymer is (1) polypropylene, for which said ratio is from 2/1 up to but not including 3/1 or 6/1 down to but not including 4/1, or (2) high density polyethylene, for which said ratio is from 3/1 to 8/1. The exposed layer comprising the said polymer is then primed; i.e. it is corona treated on the exposed polypropylene surface and the treated surface is thereafter primed, e.g. with polyethylene imine. A layer of polyethylene is then extrusion laminated to the treated and primed polymer layer. The polyethylene layer is then extrusion laminated to an aluminium foil layer using a second polymeric adhesive such as ethylene acrylic acid copolymer as an extrusion laminant. Optionally, after this step the still exposed surface of the foil may be primed using a polyacrylic acid based primer.

The foil is finally coextrusion coated with a coextrudate of a third adhesive layer such as ethylene acrylic acid copolymer, and polyethylene, thereby completing this multilayer sheet structure.

According to a second aspect of the invention, there is provided a paperless laminated sheet structure having plural layers of thermoplastic polymers including a uniaxially oriented polymer layer adjacent one surface of the sheet structure, the oriented polymer layer being selected from polypropylene, polyethylene, high density polyethylene, ethylene copolymers, polypropylene-polyethylene blends, nylons and polyesters, this oriented polymer layer being disposed within 0.2 to 4 mils (0.005 to 0.10 mm) of the said one surface, and this oriented polymer layer being oriented at a stretch ratio of 2/1 up to 6/1 except where the selected polymer is (1) polypropylene, for which said ratio is from 2/1 up to but not including 3/1 or 6/1 down to but not including 4/1, or (2) high density polyethylene, for which said ratio is from 3/1 to 8/1.

Embodiments of the invention will now be described in more detail, by way of non limitative example only, with reference to the accompanying drawings, in which:
Figure 1 is a cross-section of a preferred embodiment of sheet structures according to the invention.
Figure 2 is a cross-section of another embodiment of the invention, which is slightly modified from the embodiment shown in Figure 1.
Figure 3 is a cross-section of still another embodiment of the invention, which combines the novel strengthening layers with more conventional sealant layer structure for disposition on the interior of the tube;
Figure 4 is a perspective view of a tube forming assembly illustrating the manner of shaping the sheet structure into a tube, wherein at least some of the layers of the sheet structure are oriented in the machine direction;
Figure 5 is a view similar to Figure 4, but wherein at least some of the layers of the sheet structure are oriented in the cross machine direction during the tube forming operation;
Figure 6 is a partially cut-away view of a tube formed of a multi-layer sheet structure with orientation in the machine direction,
Figure 7 is a view similar to Figure 6, but with orientation in the cross machine direction, and
Figure 8 is another cross-sectional view of a multilayer structure forming the most preferred embodiment of the present invention.

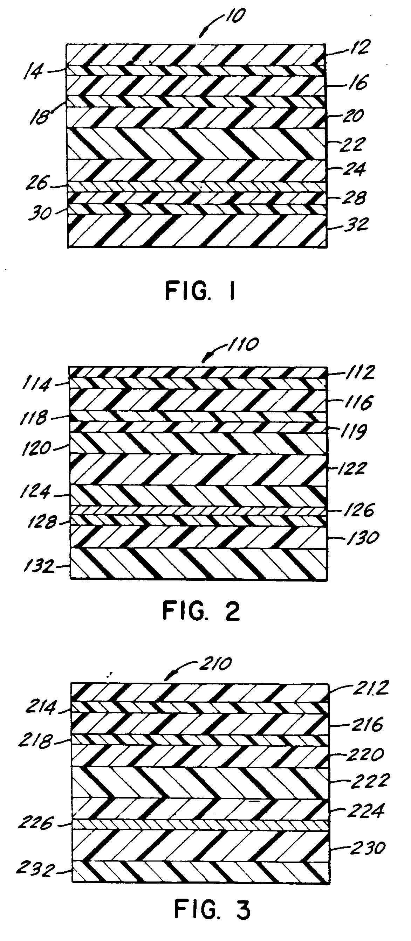

Turning now to the drawings, the numeral 10 in Figure 1 designates the entire multiple layer sheet structure cross-section. Layers 12 and 20 are low density polyethylene (LDPE). Layer 22 is pigmented LDPE. Layer 14 is ethylene methyl acrylate (EMA). Layer 16 is polypropylene (PP). Layer 18 is polyethylene imine (PEI) primer. Layers 24 and 30 are ethylene acrylic acid copolymer (EAA). Layer 26 is aluminum foil. Layer 28 is a polyacrylic acid chrome complex primer; and layer 32 is linear low density polyethylene (LLDPE). The structure contains no paper layer.

In order to realise the advantages of the present invention, two significant parameters for layer 16 must be satisfied. The first significant parameter is that the layer 16 is uniaxially oriented, with orientation ratio of 2/1 to 6/1. The second significant parameter is its location in the structure. We have found that unexpected advantages are achieved when the uniaxially oriented layer is 0.2 to 4 mils (0.005 to 0.10 mm) and preferably 1.0 mil (0.025 mm) to 1.5 mils (0.04 mm) from the surface of the sheet structure which will form the outside of a tube made therefrom.

Thus, in order to impart beneficial and highly desirable properties to containers made from the multi-layer sheet structure, it is important that the polypropylene layer be uniaxially oriented and that it be disposed at a certain distance from the outer surface of the container. The polypropylene layer 16 can be uniaxially oriented to the desired orientation ratio and thereafter laminated, such as by extrusion lamination, to the LDPE layer 12 using the EMA adhesive layer as the extrusion laminant to form a film substructure made of layers 12, 14 and 16. Alternatively it may often be more convenient, to coextrude the layers 12, 14 and 16 into a film substructure and thereafter uniaxially orient the whole substructure in order to obtain the desired orientation ratio of the polypropylene layer.

Regardless of how the film substructure is formed, the polypropylene layer is corona treated and primed with PEI primer layer 18 before extrusion laminating to the LDPE layer 20 of a substructure made of the layers 20, 22, 24, 26, 28 and 32. The latter substructure may also be found separately as a film which is then extrusion laminated to the film substructure of layers 12, 14 and 16, using the PEI layer 18 as the extrusion laminant, as aforesaid.

The advantages resulting from the inclusion of a uniaxially oriented polypropylene layer are realized irrespective of whether this layer is oriented in the machine direction (MD) or the cross-machine direction (CMD), i.e., at 90 degrees relative to the MD.

In either case, beneficial results are realized when the orientation ratio is from about 2:1 to about 6:1 preferably from 3:1 to 5:1 or from 4:1 to 5:1.

In addition to PP as the polymer for the oriented polymer layer 16, this layer may, if desired, be replaced with oriented high density polyethylene (HDPE), ethylene copolymers, a blend of PP and HDPE, nylons or polyesters.

It is important that the PP layer be disposed within the above-stated range of distances from that surface of the structure which ultimately forms the outside of a tube made therefrom.

Also, while Figure 1 depicts a film substructure of the layers 12,14 and 16, the present invention also contemplates a film substructure made of the PP layer 16 and EMA layer 14 without the LDPE layer 12. In such film the PP layer 16 is either coated with, or is extrusion laminated to the EMA layer 14.

The inclusion of the uniaxially oriented polymer layer imparts several highly advantageous properties to the tubes made from the multi-layer structure. These advantages include greater stability for printing, better ability to withstand subsequent processing operations; increased strength and, surprisingly, improved deadfold characteristics.

In Figure 2 the overall structure is designated 110. The layers in Figure 2 are numbered in the 100 series of numbers corresponding to the two digit numers of like layers serving the same or similar functions in Figure 1. Thus, both layers 12 and 112 are LDPE layers serving as an outside layer of their structures and are heat sealable. Similar comparisons apply to all layers in Figure 2, except layers 114 and 119. Layer 114 is an anhydride modified polypropylene adhesive substituted in place of the EMA of layer 14 in Figure 1. Layer 119 is an ink layer or coating used for printing artwork on the oriented polymer layer.

In Figure 3 the overall structure is designated 210. The layers in Figure 3 are numbered in the 200 series of numbers corresponding to the two digit numbers of like layers serving the same or similar functions in Figure 1. Thus LDPE, EMA and PP layers 212, 214 and 216 can together form a uniaxially oriented three layer substructure, 218 is PEI, 220 and 222 are LDPE. Layers 224 and 230 are EMA or EAA. Layer 226 is aluminium foil. Layer 232 is LDPE. All the illustrated embodiments depart from currently commercial structures in (1) having no paper layer, and (2) having the uniaxially oriented PP layer within the above-specified distance from the sheet surface.

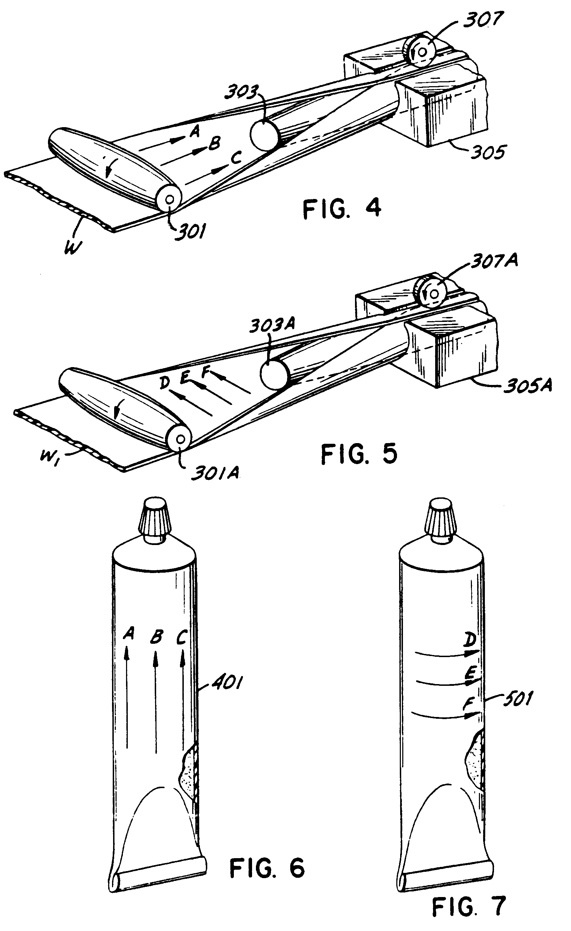

In order to form the tubular body of a typical dispensing container, reference is now directed to Figure 4 which shows an apparatus for continuously forming tubing from flat stock. Such apparatus is illustrated and described in our US-A-No. 3,540,959, the disclosure of which is incorporated herein by reference. Thus, as shown in Figure 4, a strip of the multilayer sheet structure of the present invention, designated W, is fed through a guide roller 301 onto a working piece or mandrel 303 which is enclosed in a shaping block 305. During its travel, the strip W is progressively folded around the mandrel 303 and joined together by a lap seam L formed by a heated pressure roller 307. The arrows A, B and C in Figure 4 indicate the direction of orientation of the strip W, i.e. it is in the machine direction (MD) and longitudinally in the tubing produced by the apparatus illustrated.

Figure 5 illustrates the similar method of forming tubing from a strip of the multi-layer sheet structure of the present invention, designated as W₁, wherein the direction of orientation (arrows D, E and F) is in the cross machine direction (CMD) i.e. turned about 90° compared with Figure 4. The apparatus employed in Figures 4 and 5 are otherwise the same and the various parts of the apparatus are designated with the same reference numeral followed by the reference letter A for simplicity. In the resulting tubing, the sheet structure will be oriented in the CMD, i.e. peripherally, transversely relative to the longitudinal axis of the tubing.

Figures 6 and 7 illustrates tubular containers, generally designated as 401 and 501, respectively. The arrows A, B and C in Figure 6 and D, E and F in Figure 7 shows the direction of orientation of the uniaxially oriented layers in the structures.

In order to achieve the strength and deadfold-retention objectives of the invention, the oriented PP layer should be within 0.2 to 4 mils (0.005 to 0.10 mm) of the sheet surface, preferably within 1 to 1.5 mils (0.025 to 0.038 mm). This puts certain limitations on layers 12 and 14. Since layer 12 is functionally a heat seal layer in forming the lap seal on the tube sidewall, it should desirably be as thick as possible, within the given limitations, in order consistently to form a good heat seal. Layer 14, then should be as thin as possible while still fulfilling its adhesive function of holding layers 12 and 16 together. In practice, layer 12 is between 0.8 and 1.2 mils (0.02 to 0.03 mm) thick and layer 14 is 0.2 to 0.3 mils (0.005 to 0.007 mm) thick. Layer 16 is desirably about 1 mil thick (0.025 mm).

While PEI is shown as a layer 18, it will be appreciated that, in its use as a primer, it is a thin coating and is shown as a layer for illustrative purposes only. Likewise layer 28. Layer 22 is usually a bulky, pre-formed film of pigmented white LDPE, and is about 2.75 to 3.25 mils (0.07 to 0.08 mm) thick. Layer 20 LDPE is conventionally used as an extrusion laminant to join layers 22 and 16, and is typically about 1.0 mil thick (0.025 mm).

Layer 24 is conventionally used as an extrusion laminant to join layer 22 to the foil of layer 26. The foil is advantageously between 0.25 and 0.7 mil (0.006 to 0.012 mm) thick, depending on the anticipated product and its use. The foil may be extrusion coated directly with a relatively thick layer of 2.0 mils (0.05 mm) of EAA and 1.2 mils (0.03 mm) of LDPE as in Figure 3. Alternatively, as shown in Figures 1 and 2, the foil may first be primed with polyacrylic acid chrome complex primer, layers 28 and 128. With the foil thus primed, the primer provides a certain degree of resistance to chemical attack. In these structures, the expensive EAA may be reduced to the amount required for its adhesive function, namely 0.5 mil (0.013 mm). The outer sealant layer of LLDPE is 2.0 mils (0.051 mm).

Tubes made with the sheet structures of this invention show an improved strength in surviving drop tests described hereinafter. Surprisingly, they also show increased retention of deadfold, also described hereinafter.

### Example 1

LDPE, EMA, and PP are cast coextruded using three extruders feeding into a coextrusion die, and formed into a three-layer coextruded film. The coextruded film is uniaxially oriented at an orientation ratio of 3.2/1 to form an oriented three-layer substructure 2.0 mils (0.051 mm) thick, with the following thicknesses:
0.8 mil LDPE (0.02 mm)
0.2 mil EMA (0.005 mm)
1.0 mil PP (0.025 mm)

The PP surface is corona treated and primed with PEI primer. The PP is then extrusion laminated to a previously formed 2.75 mil (0.07 mm) film of pigmented LDPE, using 1.0 mil (0.025 mm) LDPE as the extrusion laminant, to make a five layer substructure-excluding the primer. The 2.75 mil (0.07 mm) LDPE surface layer is then extrusion laminated to a 0.7 mil (0.018 mm) aluminum foil, using 1.0 mil (0.025 mm) EAAas the extrusion laminant. The opposite side of the foil is then primed with polyacrylic acid chrome complex primer and coextrusion coated with 0.5 mil (0.013 mm) EAA and 2.05 mils (0.053 mm) LLDPE, with the EAA against the foil, and the LLDPE layer forming the second outer surface of the completed sheet structure. The first outer surface is the LDPE in the uniaxially oriented three-layer substructure.

### Example 2

Another sheet structure is made using the same processes and materials but with some different layer thicknesses, as follows. The three-layer oriented substructure is 2.5 mils (0.063 mm) thick, as follows:
1.2 mils LDPE (0.03 mm)
0.3 mil EMA (0.0076 mm)
1.0 mil PP (0.025 mm)

The other differences are 0.25 mil (0.006 mm) foil and 2.0 mil (0.051 mm) LLDPE.

### Example 3

Another sheet structure is made as in Example 2 using the same processes and materials, except as follows. The three-layer oriented substructure is two mils thick, as follows:
0.8 mil LDPE (0.02 mm)
0.2 mil Admer (0.005 mm)
1.0 mil PP (0.025 mm)

Admer (registered Trade Mark) is an anhydride modified polypropylene-based adhesive polymer. After the PP layer is corona treated and primed, it is printed with ink before being extrusion laminated to the LDPE layer, which in this case is 3.25 mils (0.08 mm) thick instead of 2.75 mils (0.07 mm) as before.

### Example 4

Yet another sheet structure is made as in Example 3 using the same processes and materials, except as follows. In the three-layer oriented substructure, 0.2 mil (0.005 mm) EMA is substituted for the Admer. The ink is omitted. The extrusion laminant LDPE layer corresponding to layer 220 in Figure 3 is 0.8 mil (0.02 mm). The polyacrylic acid chrome complex primer is omitted; and the final three layers are:
0.25 mil foil (0.006 mm)
2.0 mils EAA (0.05 mm)
1.2 mils LDPE (0.03 mm)

Table 1 shows the complete structures of Examples 1-4 along with structures of a further Example B, and of comparative examples A and C which are not within the scope of this invention. Example B has a uniaxially oriented PP layer, substantially farther than 1.5 mils (0.038 mm) from the surface of the sheet structure than the other examples, the distance being 3.75 mils (0.095 mm). Comparative example A is paperless, but does not contain a uniaxially oriented layer. Comparative example C is a conventional sheet structure used commercially to make toothplaste tubes.

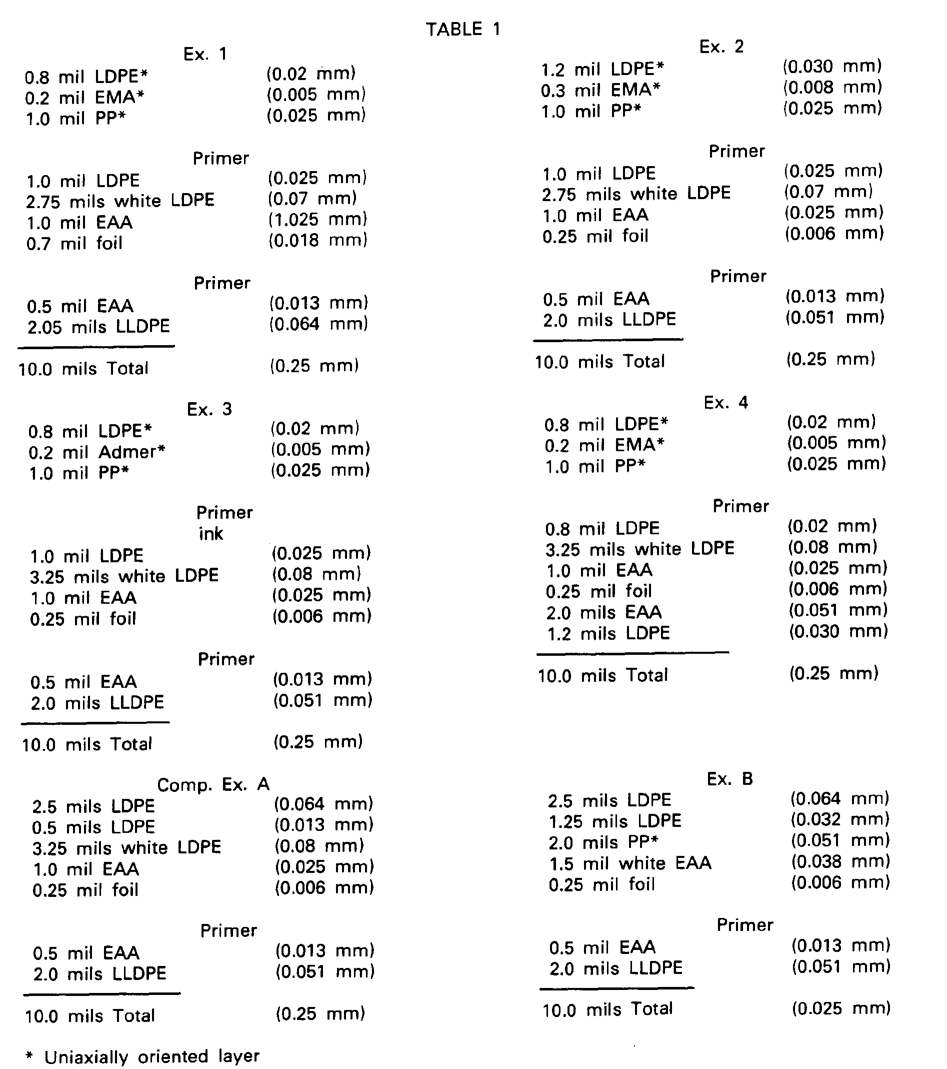

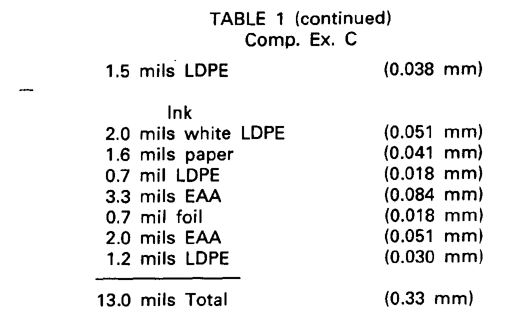

Portions of the sheet structures of Examples 1, 2, 3 and 8 and Comparative Examples A and C were made into dispensing tubes in known manner as taught by US-A-3,540,959. That is, tubes were formed by forming a longitudinal lap seam by heatsealing techniques to form tubes 1-11/32 inches (34 mm) in diameter. The tubes were then cut to length and heads were injection molded into one end, including the use of conventional inserts, and capped. The tubes were filled with product and the ends sealed. The filled tubes were then subjected to testing to demonstrate their desired properties.

### Drop tests

In a head drop test performed with tubes filled with toothpaste, a tube was dropped on its capped head from a height of 4 feet (1.22 m) onto a hard surface. The same tube was repeatedly dropped until it failed, with a maximum of 11 drops per tube, 3 tubes per variable.

In evaluating the tubes according to the drop tests, each drop was counted as one point, and the points for each Example were averaged to obtain a representative scoring for each Example. Table 2 shows that tubes made with sheet structures of this invention are physically as strong as tubes from the sheets of Comparative Example A, and much stronger than tubes from the thicker sheet of Comparative Example C.

### Deadfold tests

In the use of tubed product such as a tube of toothpaste it is desirable to be able to flatten the tube as the product is used, making subsequent dispensing easier. Thus the deadfold characteristics of a tube sheet structure material predict the ability of that tube to stay flat. The stay flat characteristic is specifically important when testing the fold on the side of the sheet structure that simulates the fold when a tube is flattened; namely folding onto itself that surface that would form the inside of the tube, such as layer 32 in Figure 1.

In performing the deadfold testa metal weight is used to establish the fold. The metal weight is a rectangular rod 1 inch (2.54 cm) square and 15 inches (38.1 cm) long, weighing 4 pounds (1.8 kg). Each test specimen of the sheet structure is 4 inches (10.1 cm) long and 1 inch (2.54 cm) wide. The strip is placed on a flat surface and bent over across its width without creasing it. The weight is then placed squarely and gently across the bent strip so that it folds it down flat and remains squarely on the folded strip. After 30 seconds the weight is removed and the sample is tipped on edge. 30 seconds after the weight is removed a protractor is used to read the angle formed by the crease, and the result is reported as an angle. Table 2 shows that deadfold retention for structures of this invention is better than deadfold retention of Comparative Example A and, in the case of Example 1 is nearly as good as Comparative Example C.

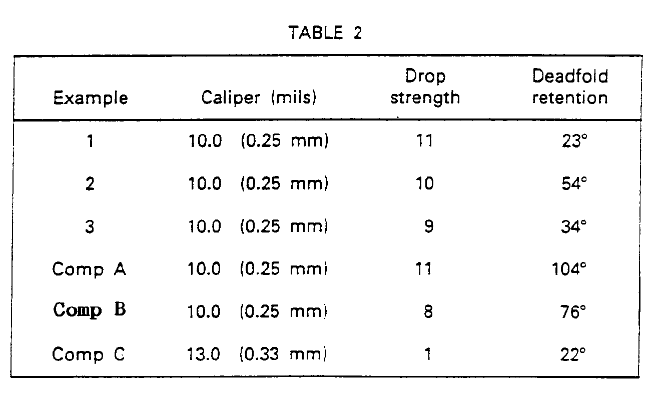

To put the data into perspective, some basic overall comparisons need to be pointed out. The commercial structure of Comparative Example C has good deadfold, poor drop strength, and is 30% thicker than the other examples, and, is costlier. Comparative Example A has good drop strength and is comparatively less expensive, but has very poor deadfold retention. The examples of the invention have good drop strength, are relatively inexpensive, and approach the commercial structure in deadfold characteristics.

As indicated hereinabove the strength and deadfold characteristics of the sheet structure materials of this invention are believed to be attributable to the uniaxial orientation of the PP layer in combination with its proper positioning in the structure. Thus it is anticipated that similar results will be obtained with similar structures wherein only the PP layer is oriented or wherein the PP and the LDPE layer such as at 12 in Figure 1 are oriented.

In the foregoing examples of the invention, the orientation was performed in the machine direction.

As it was previously mentioned, the advantages of the present invention will also be realized when the PP layer, or the film substructure of PP, EMA and LDPE (Figure 1), or their equivalent layers in Figures 2 and 3, are oriented in the cross machine direction (CMD). Thus, two tubes were made, dimensions (1-11/32"x7-7/16") (34.1 x 189 mm), from two multi-layer sheet structures, both having layers as shown in Figure 1 as follows:

### Example 5

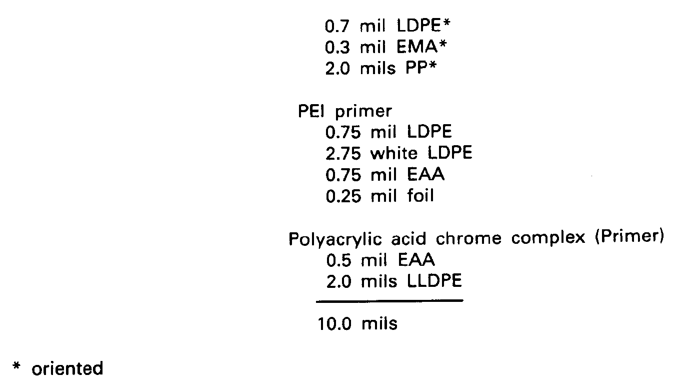

The tubes were formed by the method described in the aforementioned US-A-No. 3,540,959. The PP layer in one of the sheet structures was oriented in the MD, and in the other sheet structure, the PP layer was oriented in the CMD. The tubes were filled with Crest (Registered Trade Mark) BSM toothpaste, headed, including a urea insert, and capped. Five tubes of each type (MD and CMD) were dropped on their heads from a height of four feet (1.22 mm). In the case of the MD oriented tubes, all five failed during the first drop, with four tubes failing along the seam, and one failing in the body. In the case of the CMD oriented tubes, four of the five tubes survived 10 drops, but one failed at the seam and head bond on the first drop.

It must be noted that the thickness of the PP layer in the tubes formed in Example 5 was 2.0 mils (0.051 mm) compared to a thickness of 1.0 mil (0.025 mm) in Examples 1-4. The increased PP thickness in Example 5 requires better control of the seaming conditions, particularly in case of tubes made with multi-layer sheet structure oriented in the MD. As shown in Example 5, however, increased thickness of PP layer is less disadvantageous in case of CMD oriented tubes.

In general, it is preferable that the thickness of the PP layer be less than about 2 mils (0.051 mm), otherwise the seaming conditions during formation of the tubes must be more carefully controlled. Thus, in practice, optimum thickness of the PP layer is about 1 mil (0.025 mm).

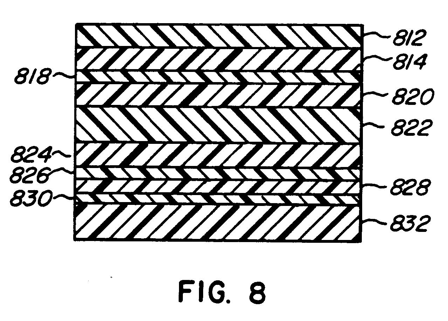

In the most preferred embodiment of the invention, high density polyethylene may be substituted for polypropylene. This embodiment is illustrated in Figure 8.

Referring to Figure 8, the layer 812 is low density polyethylene and layer 814 is high density polyethylene. The remaining layers are as follows: layer 818 is polyethylene imine (PEI) primer; layer 820 is low density polyethylene; layer 822 is pigmented low density polyethylene; layer 824 is ethylene-acrylic acid copolymer; layer 826 is aluminum foil; layer 828 is polyacrylic acid chrome complex primer; layer 830 is ethylene-acrylic acid copolymer, and layer 832 is linear low density polyethylene (LLDPE).

It will be noted from Figure 8 that the structure shown therein is similar to the structure of Figure 1, except that the polypropylene layer 16 and the ethylene-methyl acrylate layer 14 of the structure of Figure 1 have been replaced with a single layer of high density polyethylene.

As in the embodiment illustrating the use of uniaxially oriented polypropylene, the high density polyethylene is also uniaxially oriented, either in the machine direction IMD) or in the cross-machine direction (CMD). The sheet structure illustrated in Figure 8 is otherwise formed in the same manner as hereinbefore described in connection with the other embodiments of this invention.

When using high density polyethylene as in the embodiment shown in Figure 8, its orientation ratio can be at least about 3/1, and is preferably about 4/1 to about 8/1. Also, the high density polyethylene layer should be placed at about the same distance from the surface as in the case of using polypropylene.

Examples 6 and 7 illustrate a structure according to the invention, as shown specifically in Figure 8.

### Example 6

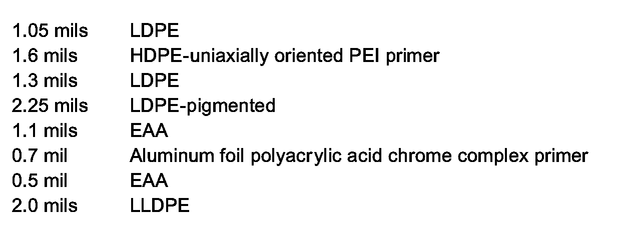

### Example 7

Same as Example 6 except there is an ink layer on one or both sides of the HDPE layer.

In Examples 6 and 7, the oriented polymer is HPDE instead of PP, and these Examples exhibit similarly improved properties like the foregoing Examples.

Further in Examples 6 and 7, it will be seen that an adhesive layer between the oriented polymer layer and the outer LDPE layer has been omitted.

Those skilled in the art will see certain polymer substitutions which may be made without detracting from the overall performance of the sheet structure, depending on the intended use. The two outer layers of the structure, for example, may be made of other heat sealable polymers, so long as they are compatible for heat sealing purposes. Depending on the polymer selected for the outer layer 12, an alternate adhesive polymer may be selected for layer 14. Also, higher density polyethylene, or ethylene copolymers may, in some cases, be advantageously used instead of LDPE in the interior layers of the sheet structure, e.g. for layers 20 and 22. Likewise, any graphics, or other ink printing, could be done at an alternative layer surface to that shown in Fig. 2.

Certain of the layers in the inventive structures herein are described as being uniaxially oriented. It has been discovered that the orientation can be in either the with-machine or the cross-machine direction.

Although "mils" have been generally converted to SI-units, it is reminded that: 1 mil=2.54x 10-⁵ m.

## Claims

1. A multiple-layer sheet structure for use in a paperless heat sealed package, having a heat sealable surface layer, an oriented polymer layer and optionally an intervening adhesive layer, wherein the oriented polymer layer is selected from polypropylene, polyethylene, high density polyethylene, ethylene copolymers, polypropylene-polyethylene blends, nylons and polyesters, and this oriented polymer layer is uniaxially oriented at a stretch ratio of 2/1 up to 6/1 except where the selected polymer is (1) polypropylene, for which said ratio is from 2/1 up to but not including 3/1 or 6/1 down to but not including 4/1, or (2) high density polyethylene, for which said ratio is from 3/1 to 8/1, and wherein the oriented polymer layer is disposed within 0.2 to 4 mils (0.005 to 0.10 mm) of that surface of the heat sealable layer which is remote from the oriented polymer layer.

2. A structure according to claim 1, which is employed in the wall of a heat sealed package, the oriented polymer layer being disposed within 0.2 to 4 mils (0.005 to 0.10 mm) of the exterior surface of the wall.

3. A structure according to claim 1, comprising, in order:
(a) a first heat sealable layer (32, 132, 232, 832) at a first exterior surface of the structure;
(b) a first adhesive layer (30, 130, 230, 830), e.g. of ethylene acrylic acid copolymer;
(c) a metal foil layer (26, 126, 226, 826);
(d) a second adhesive layer (24, 124, 224, 824);
(e) a first layer (22, 122, 222, 822) of polyethylene or an ethylene copolymer;
(f) a second layer (20, 120, 220, 820), of polyethylene or an ethylene copolymer;
(g) a primer layer (18, 118, 218, 818);
(h) a layer (16, 116, 216, 816) of the uniaxially oriented polymer;
(i) a second heat sealable layer (12, 112, 212, 812), adjacent the oriented polymer layer, at a second exterior surface of the structure; and
(j) a third adhesive layer (14, 114, 214, 814) intervening between the oriented polymer layer and the second heat sealable layer.

4. A structure according to claim 3, wherein the layer (16, 116, 216, 816) of unixially oriented polymer being 0.2 to 4 mils (0.005 to 10 mm) from the said second exterior surface, the orientation for example being in a with-machine or cross-machine direction.

5. A structure according to claim 3, wherein the second heat sealable layer (12, 112, 212, 812) is uniaxially oriented.

6. A structure according to any of claims 1 to 5, wherein said oriented polymer layer (16, 116, 216, 816), the sealable layer (12, 112, 212, 812) to which the oriented polymer layer is adhered and the intervening adhesive layer (14, 114, 214, 814) are produced by coextrusion as a three layer film and are uniaxially oriented simultaneously as a three layer film.

7. A structure according to any of claims 1 to 6, wherein the orientation ratio is not greater than 5/1, and is preferably greater than 4/1.

8. A structure according to claim 3 or any claim dependent on claim 3, wherein the said first and second heat sealable layers (32, 132, 232, 832; 12, 112, 212, 812) are compatible for heat sealing to one another.

9. A structure according to claim 3 or any claim dependenton claim 3, including ink printing on said first primer layer (18, 118, 218, 818), and between said first primer layer and said second layer (20, 120, 220, 820) of polyethylene or ethylene copolymer.

10. A structure according to claim 3 or any claim dependent on claim 3, further including a second primer (28, 128, 828), between the metal foil (26, 126, 826) and said first adhesive layer (30, 130, 830).

11. A structure according to claim 3 or any claim dependent on claim 3, wherein the three layers comprising the heat sealable layer adjacent the oriented polymer layer, the third adhesive layer and the said oriented polymer layer are in toto 2.0-2.5 mils (0.051-0.064 mm) thick and the said polymer layer is about 1.0 mil (0.025 mm) thick.

12. A structure according to claim 3 or any claim dependent on claim 3, wherein the first heat sealable layer (32, 132, 232, 832) is linear low density polyethylene, there is a polyacrylic acid-based primer between the first adhesive layer and the metal foil, the two contiguous polyethylene layers are low density polyethylene, the said primer layer (18, 118, 218, 818) between the second polyethylene layer and the uniaxially oriented layer is a polyethylene imine primer, the third adhesive layer is ethylene methyl acrylate; and the second heat sealable layer (12, 112, 212, 812) is low density polyethylene, the third adhesive layer, the said oriented polymer layer and the second heat sealable layer all being uniaxially stretched to the same stretch ratio.

13. A structure according to claim 3 or any claim dependent on claim 3, wherein the said oriented polymer layer is 1 to 1.5 mils (0.025 to 0.038 mm) or greater than 1.5 mils (0.038 mm) from the second exterior surface.

14. A flexible dispensing tube made of the sheet structure according to any of the preceding claims, wherein the heat sealable layer of the layers comprising that layer, the oriented polymer layer and the intervening adhesive forms the exterior surface of the tube, the interior surface of which is formed by the second heat sealable layer, and the tube is formed into a generally cylindrical shape having a lap heat seal between the first and second heat sealable surfaces, the uniaxially oriented polymer having its orientation direction either running the length of the tube or peripherally around the tube, transverse to its length.

15. A method of making a multiple layer sheet material comprising the steps of:
(a) coextruding a plural layer polymeric film and uniaxially orienting it to produce an oriented film having consecutive layers of polyethylene, optionally an adhesive and an orientable polymer selected from polypropylene, polyethylene, high density polyethylene, ethylene copolymers, polypropylene-polyethylene blends, nylons and polyesters, whereby the orientable polymer is located within 0.2 to 4 mils (0.005 to 0.10 mm) of that surface of the polyethylene layer remote from the orientable polymer, and the film being oriented at an orientation ratio of 2/1 up to 6/1 except when the selected polymer is (1) polypropylene, for which said ratio is from 2/1 up to but not including 3/1 or 6/1 down to but not including 4/1, or (2) high density polyethylene, for which said ratio is from 3/1 to 8/1;
(b) priming the exposed surface of the said polymer of the oriented plural layer film with a primer;
(c) extrusion laminating a layer of polyethylene to the primed surface;
(d) extrusion laminating said polyethylene layer to an aluminium foil layer using a polymeric adhesive layer as an extrusion laminant;
(e) coextrusion coating said foil with a coextrude of another adhesive layer and polyethylene to complete the structure, the overall thickness thereof for example being about 10 mils (0.25 mm).

16. A method according to claim 15, wherein the orientation is performed to an orientation ratio not greater than 5/1.

17. A method according to claim 15 or claim 16, including the further step of priming the foil with a polyacrylic acid chrome complex primer before coextrusion coating it.

18. A paperless laminated sheet structure having plural layers of thermoplastic polymers including a uniaxially oriented polymer layer adjacent one surface of the sheet structure, the oriented polymer layer being selected from polypropylene, polyethylene, high density polyethylene, ethylene copolymers, polypropylene-polyethylene blends, nylons and polyesters, this oriented polymer layer being disposed within 0.2 to 4 mils (0.005 to 0.10 mm) of the said one surface, and this oriented polymer layer being oriented at a stretch ratio of 2/1 up to 6/1 except where the selected polymer is (1) polypropylene, for which said ratio is from 2/1 up to but not including 3/1 or 6/1 down to but not including 4/1, or (2) high density polyethylene, for which said ratio is from 3/1 to 8/1.

19. A paperless laminated sheet structure according to claim 18, comprising, in order:
(a) a first heat sealable layer, e.g. low density polyethylene;
(b) a first adhesive layer;
(c) a layer of metal foil;
(d) a second adhesive layer;
(e) a first layer of polyethylene or ethylene copolymer;
(f) a second layer of polyethylene or ethylene copolymer;
(g) a primer;
(h) a layer of the uniaxially oriented polymer; and
(i) a second heat sealable layer, e.g. low density polyethylene.

20. A paperless laminated sheet structure according to claim 19, wherein the oriented polymer is high density polyethylene and the orientation ratio thereof is at least 3/1, e.g. from 4/1 to 8/1.

## Patentansprüche

1. Mehrschichtige Bahnstruktur zur Verwendung in einer papierfreien, heißgesiegelten Verpackung, mit einer hießsiegelfähigen Oberflächenschicht, einer orientierten Polymerschicht und einer ggf. zwischengeschalteten Klebstoffschicht, wobei die orientierte Polymerschicht aus Polypropylen, Polyethylen, Polyethylen hoher Dichte, Ethylencopolymeren, Polypropylen-Polyethylen-Mischungen, Nylon und Polyestern ausgewählt ist, und diese orientierte Polymerschicht uniaxial in einem Reckungsverhältnis vom 2/1 bis 6/1 uniaxial orientiert ist, ausgenommen in dem Fall, in dem das ausgewählte Polymere 1) Polypropylen, für welches das Reckungsverhältnis von 2/1 aufwärts bis, jedoch nicht einschleißlich, 3/1 oder 6/1 abwärts bis, jedoch nicht einschließlich, 4/1 reicht, oder 2) Polyethylen hoher Dichte ist, für welches das Reckungsverhältnis von 3/1 bis 8/1 reicht, und wobei die orientierte Polymerschicht innerhalb von 0,2 bis 4 mil (0,005 bis 0,10 mm) von derjenigen Oberfläche der heißsiegelfähigen Schicht angeordnet ist, die von der orientierten Polymerschicht abgewandt ist.

2. Struktur nach Anspruch 1, angewendet in der Wand einer heißgesieglten Verpackung, wobei die orientierte Polymerschicht innerhalb von 0,2 bis 4 mil (0,005 bis 0,10 mm) von der Außenfläche der Wand angeordnet ist.

3. Struktur nach Anspruch 1, bestehend, der Reihe nach, aus:
a) einer ersten heißsiegelfähigen Schicht (32, 132, 232, 832) an einer ersten äußeren Oberfläche der Struktur,
b) einer ersten Klebstoffschicht (30, 130, 230, 830), z.B. aus einem Ethylenakrylsäurecopolymeren,
c) einer Metallfolienschicht (26, 126, 226, 826),
d) einer zweiten Klebstoffschicht (24, 124, 224, 824),
e) einer ersten Schicht (22, 122, 222, 822) aus Polyethylen oder einem Ethylencopolymeren,
f) einer zweiten Schicht (20, 120, 220, 820) aus Polyethylen oder einem Ethylencopolymeren,
d) einer Primerschicht (18, 118, 218, 818)
h) einer Schicht (16, 116, 216, 816) des uniaxial orientierten Polymeren,
i) einer an die orientierte Polymerschicht angrenzenden zweiten heißsiegelfähigen Schicht (12, 112, 212, 812) an einer zweiten äußeren Oberfläche der Struktur und
j) einer dritten Klebstoffschicht (14, 114, 214, 814) zwischen der orientierten Polymerschicht und der zweiten heißsiegelfähigen Schicht.

4. Struktur nach Anspruch 3, bei der die Schicht (16, 116, 216, 816) des uniaxial orientierten Polymeren 0,2 bis 4 mil (0,005 bis 0,10 mm) von der zweiten äußeren Oberfläche liegt und die Orientierung zum Beispiel in Maschinenrichtung oder in Maschinenquerrichtung vorliegt.

5. Struktur nach Anspruch 3, bei der die zweite heißsiegelfähige Schicht (12, 112, 212, 812) uniaxial orientiert ist.

6. Struktur nach einem der Ansprüche 1 bis 5, bei der die orientierte Polymerschicht (16,116, 216, 816), die siegelfähige Schicht (12, 112, 212, 812), mit der die orientierte Polymerschicht verklebt ist, und die zwischengeschaltete Klebstoffschicht (14, 114, 214, 814) durch Coextrusion als dreischichtige Folie hergestellt und gleichzeitig als dreischichtige Folie uniaxial orientiert sind.

7. Struktur nach einem der Ansprüche 1 bis 6, bei der das Orientierungsverhältnis nich größer als 5/1 und vorzugsweise größer als 4/1 ist.

8. Struktur nach Anspruch 3 oder einem von Anspruch 3 abhängigen Anspruch, bei der die erste und die zweite heißsiegelfähige Schicht (32, 132, 232, 832, 12, 112, 212, 812) für eine Heißversiegelung miteinander geeignet sind.

9. Struktur nach Anspruch 3 oder einem von Anspruch 3 abhängigen Anspruch, mit einem Farbdruck auf der ersten Primerschicht (18, 118, 218, 818) und zwischen der ersten Primerschicht und der zweiten Schicht (20, 120, 220, 820) aus Polyethylen oder einem Ethylencopolymeren.

10. Struktur nach Anspruch 3 oder einem von Anspruch 3 abhängigen Anspruch, mit einem zweiten Primer (28, 128, 828) zwischen der Metallfolie (26, 126, 826) und der ersten Klebstoffschicht (30, 130, 830).

11. Struktur nach Anspruch 3 oder einem von Anspruch 3 abhängigen Anspruch, bei der die drei Schichten, die die an die orientierte Polymerschicht angrenzende heißsiegelfähige Schicht, die dritte Klebstoffschicht und die orientierte Polymerschicht umfassen, insgesamt 2,0 bis 2,5 mil (0,051 bis 0,064 mm) dick sind und die Polymerschicht etwa 1,0 mil (0,025 mm) dickt ist.

12. Struktur nach Anspruch 3 oder einem von Anspruch 3 abhängigen Anspruch, bei der die erste heißsiegelfähige Schicht (32, 132, 232, 832) ein lineares Polyethylen niederer Dichte ist, ein Primer auf der Basis von Polyakrylsäure zwischen der ersten Klebstoffschicht und der Metallfolie vorhanden ist, die beiden aufeinanderfolgenden Polyethylenschichten aus Polyethylen niederer Dichte bestehen, die Primerschicht (18, 118, 218, 818) zwischen der zweiten Polyethylenschicht und der uniaxial orientierten Schicht ein Polyethylenimin-Primer ist, die dritte Klebstoffschicht aus Ethylenmethylacrylat besteht und die zweite heißsiegelfähige Schicht (12, 112, 212, 812) Polyethylen niederer Dichte ist, wobei die dritte Klebstoffschicht, die orientierte Polymerschicht und die zweite heißsiegelfähige Schicht sämtlich uniaxial in dem gleichen Reckungsverhältnis gereckt sind.

13. Struktur nach Anspruch 3 oder einem von Anspruch 3 abhängigen Anspruch, bei der die orientierte Polymerschicht 1 bis 1,5 mil (0,025 bis 0,038 mm) oder mehr als 1,5 mil (0,038 mm) von der zweiten äußeren Oberfläche liegt.

14. Flexible Spendertube aus der Bahnstruktur nach einem der vorhergehenden Ansprüche, bei der die heißsiegelfähige Schicht der diese Schicht, die orientierte Polymerschicht und den zwischengeschalteten Klebstoff umfassenden Schichten die äußere Oberfläche der Tube bildet, deren innere Oberfläche der Tube bildet, deren innere Oberfläche von einer zweiten heißsiegelfähigen Schicht gebildet ist, und wobei die Tube in eine allgemein zylindrische Form mit einer Überlappungsheißsiegelnaht zwischen der ersten und der zweiten heißsiegelfähigen Oberfläche gebracht ist und die Orientierungsrichtung des uniaxial orientierten Polymeren entweder in der Länge der Tube oder in Umfangsrichtung um die Tube, quer zu ihrer Länge, verläuft.

15. Verfahren zum Herstellen eines mehrschichtigen Bahnmaterials, bestehend aus den Schritten, daß
a) eine mehrschichtige polymere Folie coextrudiert und diese uniaxial orientiert wird, um eine orientiert Folie mit aufeinanderfolgenden Schichten aus Polyethylen, ggf. einem Klebstoff und einem orientierungsfähigen Polymeren, ausgewählt aus Polypropylen, Polyethylen, Polyethylen hoher Dichte, Ethylencopolymeren, Polypropylen-Polyethylen-Mischungen, Nylon und Polyestern zu erzeugen, wobei das orientierungsfähige Polymere innerhalb von 0,2 bis 4 mil (0,005 bis 0,10 mm) von derjenigen Oberfläche der Polyethylenschicht liegt, die von dem orientungsfähigen Polymeren abgewandt ist, und wobei die Folie mit einem Orientierungsverhältnis von 2/1 bis 6/1 orientiert wird, ausgenommen dann, wenn das ausgewählte Polyemere 1) Polypropylen, für welches das Orientierungsverhältnis von 2/1 aufwärts bis, jedoch nicht einschließlich, 3/1 oder 6/1 abwärts bis, jedoch nich einschließlich, 4/1 beträgt, oder 2) Polyethylen hoher Dichte ist, für welches das Orientungsverhältnis von 3/1 bis 8/1 reicht;
b) die freiliegende Oberfläche des Polymeren der orientierten Mehrschichtfolie mit einem Primer behandelt wird;
c) eine Polyethylenschicht auf die primerbehandelte Oberfläche extrusionsaufkaschiert wird;
d) die Polyethylenschicht auf einen Aluminiumfolienschicht unter Verwendung einer polymeren Klebstoffschicht als Extrusionskaschiermittel extrusionsaufkaschiert wird;
e) die Folie mit einem Coextrudat einer weiteren Klebstoffschicht und von Polyethylen zur Vervollständigung der Struktur coextrusionsbeschichtet wird, wobei ihre Gesamtdicke zum Beispiel etwa 10 mil (0,25 mm) beträgt.

16. Verfahren nach Anspruch 15, bei dem die Orientierung mit einem Orientierungsverhältnis durchgeführt wird, das nicht größer als 5/1 ist.

17. Verfahren nach Anspruch 15 oder Anspruch 16, mit dem weiteren Schritt, daß die Folie mit einem Polyacrylsäurechromkomplex-Primer behandelt wird, bevor sie coextrusionsbeschichtet wird.

18. Papierfreie Bahnschichtenstruktur mit mehreren Schichten aus thermoplastischen Polymeren einschließlich einer uniaxial orientierten Polymerschicht, die an eine Oberfläche der Bahnstruktur angrenzt, wobei die orientierte Polymerschicht aus Polypropylen, Polyethylen, Polyethylen hoher Dichte, Ethylencopolymeren, Polypropylen-Polyethylen-Mischungen, Nylon und Polyestern ausgewählt ist, diese orientierte Polymerschicht innerhalb von 0,2 bis 4 mil (0,005 bis 0,10 mm) von der einen Oberfläche liegt und diese orientierte Polymerschicht ferner mit einem Reckungsverhältnis von 2/1 bis 6/1 orientiert ist, ausgenommen in dem Fall, in dem das ausgewählt Polymer 1) Polypropylen, für welches das Reckungsverhältnis von 2/1 aufwärts bis, jedoch nicht einschließlich, 3/1 bis 6/1 abswärts bis, jedoch nicht einschließlich, 4/1 reicht, oder 2) Polyethylen hoher Dichte ist, für welches das Reckungsverhältnis von 3/1 bis 8/1 reicht.

19. Papierfreie Bahnschichtenstruktut nach Anspruch 18, bestehend, der Reihe nach, aus:
a) einer ersten heißsiegelfähigen Schicht, z.B. Polyethylen niederer Dichte,
b) einer ersten Klebstoffschicht,
c) einer Schicht aus einer Metallfolien,
d) einer zweiten Klebstoffschicht,
e) einer ersten Schicht aus Polyethylen oder einem Ethylencopolymeren,
f) einer zweiten Schicht aus Polyethylen oder einem Ethylencopolymeren,
g) einem Primer,
h) einer Schicht aus dem uniaxial orientierten Polymeren und
i) einer zweiten heißsiegelfähigen Schicht, z.B. Polyethylen niederer Dichte.

20. Papierfreie Bahnschichtenstruktur nach Anspruch 19, bei der das orientierte Polymere ein Polyethylen hoher Dichte ist und dessen Orientierungsverhältnis zumindest 3/1, z.B. 4/1 bis 8/1, betragt.

## Revendications

1. Structure en feuille multicouches destinée à être utilisée dans un emballage thermosoude sans papier, comprenant une couche superficielle thermosoudable, une couche de polymère orienté et éventuellement une couche adhésive intermédiaire, la couche de polymère orienté étant choisi parmi le polypropylène le polyéthylène, le polyéthylène haute densité, des copolymères d'éthylène, des mélanges polypropylène/polyéthylène, des nylons et des polyesters, cette couche de polymère orienté étant orientée uniaxialement avec un rapport d'étirage de 2/1 à 6/1, sauf quand le polymère uniaxialement avec un rapport d'étirage de 2/1 à 6/1, sauf quand le polymère choisi est (1) le polypropylène, auquel cas ledit rapport est compris entre 2/1 et 3/1 non inclusivement ou entre 6/1 et 4/1 non inclusivement, ou (2) le polyéthylène haute densité, auquel cas ledit rapport est compris entre 3/1 et 8/1, et la couche de polymère orienté étant disposée à une distance comprise entre 0,005 et 0,10 mm (0,2 et 4 mils) de la surface de la couche thermosoudable qui est éloignée de la couche de polymère orienté.

2. Structure selon la revendication 1 qui est utilisée dans la paroi d'un emballage thermosoudé, la couche de polymère orienté étant disposée à une distance comprise entre 0,005 et 0,10 mm (0,2 et 4 mils) de la surface extérieure de la paroi.

3. Structure selon la revendication 1, comprenant dans l'ordre:
(a) une première couche thermosoudable (32, 132, 232, 832) au niveau d'une première surface extérieure de la structure;
(b) une première couche adhésive (30, 130, 230, 830), par exemple en copolymère éthylène/acide acrylique;
(c) une couche de feuille métallique (26, 126, 226, 826);
(d) une deuxième couche adhésive (24, 124, 224, 824);
(e) une première couche (22, 122, 222, 822) de polyéthylène ou d'un copolymère d'éthylène;
(f) une deuxième couche (20, 120, 220, 820) de polyéthylène ou d'un copolymère d'éthylène;
(g) une couche de fond (18, 118, 218, 818);
(h) une couche (16, 116, 216, 816) du polymère orienté uniaxialement;
(i) une deuxième couche thermosoudable (12,112,212,812) contiguë à la couche de polymère orienté, au niveau d'une seconde surface extérieure de la structure; et
j) une troisième couche adhésive (14, 114, 214, 814) interposée entre la couche de polymère orienté et la deuxième couche thermosoudable.

4. Structure selon la revendication 3, dans laquelle la couche (16,116,216,816) de polymère orienté uniaxialement est à une distance comprise entre 0,005 et 0,10 mm (0,2 et 4 mils) de ladite seconde surface extérieure, l'orientation étant par exemple dans la direction de la machine ou dans la direction transversale.

5. Structure selon la revendication 3, dans laquelle la deuxième couche thermosoudable (12, 112, 212, 812) est orientée uniaxialement.

6. Structure selon l'une quelconque des revendications 1 à 5, caractérisée en ce que ladite couche de polymère orienté (16, 116, 216, 816), la couche thermosoudable (12, 112, 212, 812) à laquelle adhère la couche de polymère orienté et la couche adhésive interposée (14, 114, 214, 814) sont produites parcoex- trusion sous forme de film à trois couches et sont simultanément orientées uniaxialement à l'état de film à trois couches.

7. Structure selon l'une quelconque des revendications 1 à 6, dans laquelle le rapport d'orientation ne dépasse pas 5/1 et est de préférence supérieur à 4/1.

8. Structure selon la revendication 3 ou l'une quelconque des revendications dépendant de la revendication 3, dans laquelle lesdites première et deuxième couches thermosoudables (32, 132, 232, 832, 12, 112, 212, 812) sont compatibles pour un thermosoudage mutuel.

9. Structure selon la revendication 3 ou l'une quelconque des revendications dépendant de la revendication 3, comprenant une impression à l'encre sur ladite première couche de fond (18, 118, 218, 818) et entre cette première couche de fond et ladite deuxième couche (20, 120, 220, 820) de polyéthylène ou de copolymère d'éthylène.

10. Structure selon la revendication 3 ou l'une quelconque des revendications dépendant de la revendication 3, comprenant en outre une deuxième couche de fond (28, 128, 828) entre la feuille métallique (26, 126, 826) et ladite première couche adhésive (30, 130, 830).

11. Structure selon la revendication 3 ou l'une quelconque des revendications dépendant de la revendication 3, dans laquelle les trois couches comprenant la couche thermosoudable contiguë à la couche de polymère orienté, la troisième couche adhésive et la couche de polymère orienté ont au total une épaisseur de 0,051 à 0,064 mm (2,0 à 2,5 mils) et ladite couche de polymère à une épaisseur d'environ 0,025 mm (1,0 mil).

12. Structure selon la revendication 3 ou l'une quelconque des revendications dépendant de la revendication 3, dans laquelle la première couche thermosoudable (32,132,232,832) est en polyéthylène linéaire basse densité, il est prévu une couche de fond à base d'acide polyacrylique entre la première couche adhésive et la feuille métallique, les deux couches de polyéthylène contiguës sont en polyéthylène basse densité, ladite couche de fond (18,118, 218, 818) entre la deuxième couche de polyéthylène et la couche orientée uniaxialement est une couche de fond en polyéthylèneimine, la troisième couche adhésive est en éthylè- ne/acrylate de méthyle, et la deuxième couche thermosoudable (12, 112, 212, 812) esh en polyéthylène basse densité, la troisième couche adhésive, ladite couche de polymère orienté et la deuxième couche thermosoudable étant toutes étirées uniaxialement au même rapport d'étirage.

13. Structure selon la revendication 3 ou l'une quelconque des revendications dépendant de la revendication 3, dans laquelle ladite couche de polymère orienté est à une distance de 0,025 à 0,038 mm (1 à 1,5 mil) ou de plus de 0,038 mm (1,5 mil) de la seconde surface extérieure.

14. Tube distributeur flexible fabriqué à partir de la structure en feuille selon l'une quelconque des revendications 1 à 13, dans lequel la couche thermosoudable, parmi les couches comprenant cette couche, la couche de polymère orienté et la couche adhésive interposée, constitue la surface extérieure du tube. dont la surface intérieure est constituée par une deuxième couche thermosoudable, et le tube à une forme généralement cylindrique avec une thermosoudure à recouvrement entre la première et la deuxième couches thermosoudables, le polymère orienté uniaxialement ayant une direction de son orientation qui s'étend, soit le long du tube, soit périphériquement autour du tube transversalement par rapport à sa longueur,

15. Procédé de fabrication d'un matériau en feuille multicouches, comprenant les opérations consistant à:
(a) co-extruder un film de polymère à plusieurs couches et l'orienter uniaxialement pour produire un film orienté qui comprend successivement une couche de polyéthylène, éventuellement une couche adhésive et une couche de polymère orientable choisi parmi le polypropylène, le polyéthylène, le polyéthylène haute densité, des copolymères d'éthylène des mélanges polypropylène/polyéthylène, des nylons et des polyesters, de telle façon que le polymère orientable soit situé à une distance comprise entre 0,005 et 0,10 mm (0,2 et 4 mils) de la surface de la couche de polyéthylène qui est éloignée du polymère orientable et que le film soit orienté avec un rapport d'orientation de 2/1 à 6/1, sauf quand le polymère choisi est (1) le polypropylène, auquel cas ledit rapport est compris entre 2/1 entre 3/1 non inclusivement ou entre 6/1 et 4/1 non inclusivement, ou (2) le polyéthylène haute densité, auquel cas ledit rapport est compris entre 3/1 et 8/1 ;
(b) appliquer une couche de fond sur la surface exposée dudit polymère du film à plusieurs couches orienté;
(c) contrecoller par extrusion une couche de polyéthylène sur la surface garnie de la couche de fond;
(d) contrecoller par extrusion ladite couche de polyéthylène sur une couche de feuille d'aluminium en utilsant une couche adhésives en polymère comme contrecollant d'extrusion;
(e) revêter par co-extrusion ladite feuille d'aluminium d'un co-extrudat d'une autre couche adhésive et de polyéthylène pour achever la structure, dont l'épaisseur totale est par exemple d'environ 0,25 mm (10 mils).

16. Procédé selon la revendication 15, dans lequel l'orientation est effectuée avec un rapport d'orientation ne dépassant pas 5/1.

17. Procédé selon la revendication 15 ou 16, comprenant l'opération supplémentaire qui consiste à appliquer une couche de fond d'un complexe acide polyacrylique/chrome sur la feuille d'aluminium avant de la revêtir par co-extrusion.

18. Structure en feuille stratifiée sans papier, comportant plusieurs couches de polymères thermoplastiques qui comprennant une couche de polymère orienté uniaxialement contiguë à l'une des surfaces de la structure en feuille, la couche de polymère orienté étant choisi parmi le polypropylène, le polyéthylène, le polyéthylène haute densité, des copolymères d'éthylène, des mélanges polypropylène/polyéthylène, des nylons et des polyesters, cette couche de polymère orienté étant disposée à une distance comprise entre 0,005 et 0,10 mm (0,2 et 4 mils) de ladite surface de la structure en feuille, et cette couche de polymère orienté étant orientée avec un rapport d'étirage de 2/1 à 6/1, sauf quand le polymère choisi est (1) le polypropylène, auquel cas ledit rapport est compris entre 2/1 et 3/1 non inclusivement ou entre 6/1 et 4/1 non inclusivement, ou (2) le polyéthylène haute densité, auquel cas ledit rapport est compris entre 3/1 et 8/1.

19. Structure en feuille stratifiée sans papier selon la revendication 18, comprenant dans l'ordre:
(a) une première couche thermosoudable, par exemple en polyéthylène basse densité;
(b) une première couche adhésive;
(c) une couche de feuille métallique;
(d) une deuxième couche adhésive;
(e) une première couche de polyéthylène ou d'un copolymère d'éthylène;
(f) une deuxième couche de polyéthylène ou d'un copolymère d'éthylène:
(g) une couche de fond;
(h) une couche du polymère oriente uniaxialement; et
(i) une deuxième couche thermosoudable, par exemple de polyéthylène basse densité.

20. Structure en feuille stratifiée sans papier selon la revendication 19, dans laquelle le polymère orienté est un polyéthylène haute densité et le rapport d'orientation de celui-ci est d'au moins 3/1, par exemple de 4/1 à 8/1.
